Europäisches Patentamt

European Patent Office

Office européen des brevets

(11) Veröffentlichungsnummer: **0 466 044 A1**

## EUROPÄISCHE PATENTANMELDUNG

(21) Anmeldenummer: **91111208.4**

(22) Anmeldetag: **05.07.91**

(51) Int. Cl.5: **B05D  1/20**

(30) Priorität: **07.07.90 DE 4021733**

(43) Veröffentlichungstag der Anmeldung:
**15.01.92 Patentblatt  92/03**

(84) Benannte Vertragsstaaten:
**BE DE DK FR GB GR IT NL SE**

(71) Anmelder: **HOECHST AKTIENGESELLSCHAFT**
**Postfach 80 03 20**
**W-6230 Frankfurt am Main 80(DE)**

(72) Erfinder: **Möhwald, Helmuth, Prof. Dr.**
**Dr. Gebauer-Strasse 21**
**W-6530 Bingen(DE)**
Erfinder: **Tippmann-Krayer, Petra**
**Zum Stefflacker 3**
**W-8000 München(DE)**
Erfinder: **Meisel, Werner**
**Im Ouellborn 17**
**W-6501 Kleinwinternheim(DE)**
Erfinder: **Höhne, Ulrike**
**Pommernstrasse 2**
**W-6550 Bad Kreuznach(DE)**

(54) Verfahren zur Herstellung anorganischer Mikrostrukfuren aus Langmuir-Blodgett-Schichten.

(57) Verfahren zur Herstellung von anorganischen Mikrostrukturen aus Langmuir-Blodgett-Schichten, wobei eine oder mehrere Schichten von Salzen von organischen Säuren unter Erhalt ihrer Ordnung auf einen Träger übertragen werden. Dabei sind die benachbarten Schichten aus gleichen oder verschiedenen Salzen aufgebaut. Anschließend wird die organische Komponente durch Erhitzen thermodesorbiert, so daß die anorganische Komponente auf dem Träger zurückbleibt.

EP 0 466 044 A1

Rank Xerox (UK) Business Services

Beschichtete Träger gewinnen in der industriellen Technik in zunehmendem Maße an Bedeutung. So werden beispielsweise optische Wellenleitersysteme oder Filter für optische Zwecke mit dünnen Filmen beschichtet, welche auf Grund ihrer geringen kritischen Oberflächenspannung auch zur Verbesserung der Reibungseigenschaften dieser Materialien, zur Herstellung von Schutzschichten sowie für weitere einschlägige Anwendungen geeignet sind.

Die Herstellung monomolekularer Schichten und der Aufbau von Systemen aus monomolekularen Schichten aus anorganischen Metallen bzw. Metallionen ist für das Studium von Oberflächenreaktionen, wie Katalyse oder Korrosion, insbesondere aber auch für den Aufbau magnetischer Informationsspeicher und für optische Anwendungsgebiete wichtig.

Am einfachsten erscheint es, von monomolekularen Schichten als Untereinheiten für den Aufbau komplexer Systeme auszugehen. Diese Schichten erhält man durch Übertragen monomolekularer Filme von einer Flüssigkeitsoberfläche auf einen geeigneten festen Träger. Auf einer Wasseroberfläche können solche Filme - z.B. aus Molekülen einer Fettsäure mit 20 Kohlenstoffatomen (Arachinsäure, $CH_3-(CH_2)_{18}-COOH$) - leicht gebildet und dicht gepackt werden. Dazu wird eine Lösung der organischen Säure auf eine Wasseroberfläche getropft, die durch starre Barrieren und ein bewegliches Floß begrenzt ist. Das Lösungsmittel verdampft, und die zurückbleibenden Moleküle werden durch eine definierte Kraft, die auf das Floß wirkt, zusammengeschoben und dicht gepackt. Da die Moleküle einen hydrophilen (z.B. Carboxylgruppe) und einen hydrophoben Teil (z.B. Kohlenwasserstoffkette) aufweisen und in Wasser sehr wenig löslich sind, orientieren sie sich an der Wasseroberfläche. Die hydrophilen Gruppen bleiben im Wasser, und die hydrophoben Ketten sind aufgerichtet.

Zur Übertragung ("Aufziehen") eines dichtgepackten Langmuir-Blodgett-Films von der Wasseroberfläche auf einen festen Träger wird dieser eingetaucht und wieder herausgezogen. Beim Herausziehen haften die hydrophilen Gruppen des Films an der hydrophilen Trägeroberfläche, und die Platte wird dadurch mit einer monomolekularen Schicht bedeckt. Ein hydrophobes Substrrat wird dagegen schon beim ersten Eintauchen beschichtet. Bei jedem weiteren Tauchvorgang (Ein- und Austauchen) werden zwei weitere monomolekulare Schichten übertragen. Dabei bewirkt jeweils die Wechselwirkung zwischen hydrophilen Gruppen oder hydrophoben Endgruppen die Haftung der übertragenen Schicht an der vorangegangenen.

Jahrelang wurden Langmuir-Blodgett (LB)-Filme lediglich wegen ihrer monomolekularen Schichtstrukturen als interessant erachtet. 1967 erregte Kuhn (Kuhn, Naturwissenschaften 1967, 54, 429) mit seiner neuen Strategie, Multischichten zu arrangieren, in welchen "kluge" Moleküle in einer inerten Matrix von Fettsäuremolekülen angeordnet waren, Aufsehen. Dies war der Ausgangspunkt für eine Vielfalt funktionell gestalteter LB-Filme. Polymerisation, Polykondensation, Redoxreaktionen sowie in-situ-Synthesen in diesem geordneten Zustand wurden entwickelt (Ruaudel-Teixier, Rosilio, Barraud, Thin Solid Films, 1980, 68, 7). Im organisierten festen Zustand steht die Reaktivität in einem engen Zusammenhang mit der Struktur, so daß es von hohem Interesse ist, solche Filme für die gewünschten Anwendungsgebiete gezielt herzustellen. Derartige molekulare Anordnungen besitzen neue interessante Eigenschaften, die sich von denen der Ausgangssubstanzen teilweise erheblich unterscheiden.

Die thermische Behandlung von Langmuir-Blodgett-Filmen auf der Wasseroberfläche zur Herstellung qualitativ hochwertiger Schichten aus Calciumarachidat ist bekannt (Kato, Ohshima, Suzuki, Thin Solid Films, 178, 37-45). Hier werden unlösliche Monoschichten auf der Luft-Wasser-Grenzfläche verdichtet, einer thermischen Behandlung unterworfen und anschließend auf einen Träger aufgezogen. Dies soll zu möglichst defektfreien LB-Filmen von Calciumarachidat führen.

Die thermische Behandlung von Schichten aus verschiedenen Metallen ist in der Literatur mehrfach beschrieben worden. Bei diesem Verfahren werden dünne Schichten von Metallen oder anorganischer Verbindungen (z.B. Metalle der seltenen Erden, Galliumarsenide) auf einen Träger aufgebracht, beispielsweise durch Aufdampfen, und anschließend einer thermischen Behandlung unterworfen, wodurch es zur Bildung verschiedener intermetallischer Phasen oder anderer Formationen kommt. Die Anwendungstemperaturen liegen bei diesen Verfahren zwischen 200 und 700 °C. (J. Vac. Sci, Technol. A, 7 (5), 3016-3022; Mater. Res. Soc. Symp. Proc. 144, 526-530, CA 112 (14): 129936 v; J. Less-Common Met. 151, 263-9; CA H 111 (12): 105999 w).

Die Herstellung von Schichten mit definiertem molekularem Aufbau ist durch diese Verfahren jedoch nicht gewährleistet.

Es bestand daher immer noch die Aufgabe, ein Verfahren zu finden, das es erlaubt, Metallschichten mit definierter Schichtdicke in molekularen Größenordnungen gezielt herzustellen, wobei das Metall je nach Anwendungszweck in oxidischer oder atomarer Form auf dem Träger vorliegen kann. Das vorliegende Verfahren löst diese Aufgabe. Es beruht auf der Erkenntnis, daß sich in Multischichten aus Salzen organischer Säuren die organische Komponente gezielt aus den einzelnen Schichten durch eine thermische Behandlung desorbieren läßt, wobei die anorganische Komponente auf dem Träger zurückbleibt.

Durch das erfindungsgemäße Verfahren lassen sich anorganische Mikrostrukturen aus Langmuir-Blodgett Schichten herstellen, indem man eine oder mehrere monomolekulare Schichten von Salzen organischer Säuren unter Erhalt ihrer Ordnung auf einen Träger überträgt und die organische Komponente anschließend durch Erhitzen thermodesorbiert, wobei das Metallion auf der Trägeroberfläche zurückbleibt. Die auf dem Träger aufgezogenen benachbarten Schichten können hierbei je nach Wunsch aus gleichen oder verschiedenen Salzen aufgebaut sein.

Das erfindungsgemäße Verfahren besteht im Prinzip aus drei Schritten:

a) Aufbau einer Schichtstruktur

b) Thermische Behandlung der Multischicht

c) eventuelle Nachbehandlung der Multischicht

Der Aufbau einer Schichtstruktur, bestehend aus mehreren monomolekularen Lagen, kann in einfachster Weise durch das Langmuir-Blodgett Verfahren erfolgen. Durch Spreitung von Salzen organischer Säuren auf einer Wasseroberfläche, oder aber auch durch Spreitung organischer Säuren auf einer Subphase in der Metallionen gelöst sind (Thin Solid Films, 146 (1987) L15-L17), Kompression dieser Schicht und anschließendes Übertragen auf einen Träger lassen sich dichtgepackte Mono- oder Multischichten herstellen. Die organische Komponente des Salzes kann beispielsweise ein Arachinsäure-, Stearinsäure, Palmitinsäure- oder anderer Fettsäurerest, oder eine andere amphiphile Säure, z.B. ein geladenes Phospholipid, sein. Als anorganische Komponente können allgemein alle Metalle verwendet werden, bevorzugt alle Übergangsmetalle, insbesondere Eisen, Kobalt, Cadmium, Chrom, Kupfer, Nickel, Mangan, Platin, Silber, Gold und Rhodium, aber auch Natrium, Kalium, Calcium, Strontium und Barium. Ferner können als Ausgangsmaterialien auch polymere Salze eingesetzt werden. Die Schichten die sich für das erfindungsgemäße Verfahren eignen, können durch Adsorptionsprozesse ebenso wie durch den Langmuir-Blodgett Prozeß hergestellt werden. Unter dem Begriff "Langmuir-Blodgett-Schichten" sollen hierbei allgemein dünne, im Idealfall monomolekulare Schichten oder definiert aufgebaute Multischichten verstanden werden.

Die Schichtstruktur soll so aufgebaut sein, daß entlang der Oberflächennormale die Verteilung der Metallionen und der organischen Komponenten alterniert.
Hierzu wird eine Monoschicht einer organischen Säure auf einer Wasseroberfläche gespreitet. Die wässrige Subphase besitzt hierbei einen pH-Wert höher als 5, vorzugsweise im Bereich von 5 bis 9, so daß ein Proton der organischen Säure abdissoziiert, wobei die Metall-Ionen durch Zugabe eines anorganischen Salzes (beispielsweise Chlorid, Bromid, Jodid, Nitrat, etc.) in die Subphase überführt werden. Beim Einbau eines zweiwertigen Metalls beträgt dessen Konzentration in der Subphase vorzugsweise $10^{-4}$ bis $10^{-3}$ M, bei drei- oder höherwertigen Ionen kann die Konzentration um ein Vielfaches geringer sein, während sie bei einwertigen Metallen über $10^{-4}$, vorzugsweise über $10^{-2}$ M betragen sollte. Das Salz kann nach der LB-Technik auf einen Träger, welcher beispielsweise aus Glas oder Silizium bestehen kann, übertragen werden, wobei durch wiederholtes Ein- und Austauchen Multischichten erzeugt werden, bei denen die aus den aliphatischen Ketten bestehenden Schichten durch eine Metallschicht interkaliert werden. Durch Auswechseln der Subphase zwischen den einzelnen Tauchprozessen ist es möglich auch interkalierende Schichten aus verschiedenen Metall-Ionen aufzubauen. Auf diese Weise lassen sich durch das erfindungsgemäße Verfahren Mikrostrukturen erzeugen, die aus verschiedenen Metallen bzw. Metallionen bestehen.

Durch nachfolgende thermische Behandlung der Multischicht kann diese geschmolzen oder sublimiert werden. Durch Wahl der geeigneten Temperatur wird die organische Komponente desorbiert (bei 100 bis 350°C) während die anorganische Komponente auf der Trägeroberfläche zurückbleibt. Die jeweils anzuwendenden Temperaturen sind dabei von dem entsprechenden Ion und Gegenion abhängig.

Bisher sind folgende zwei Mechanismen der Thermodesorption von Multischichten bekannt:

-a) Bei einem Erhitzen der Multischichten auf 100-160°C kommt es zunächst zur Ausbildung von Tropfen. Bei einer weiteren Steigerung der Temperatur reißt die Oberfläche unter weiterer Tropfenbildung mehr und mehr auf, die organische Komponente desorbiert und zurück bleiben Cluster des entsprechenden Metalls bzw. der entsprechenden Metallionen. (Beispiel 1 )

-b) Beim Erhitzen der Multischicht findet kein Aufbrechen der Schicht und keine Tröpfchenbildung statt. Die organische Komponente desorbiert und das Metall, bzw. die Metallionen bleiben als zusammenhängende Schicht auf dem Träger zurück. (Beispiel 1 ).

Somit lassen sich je nach Wahl der anorganischen und organischen Komponenten durch das erfindungsgemäße Verfahren Mikrostrukturen mit unterschiedlichem Aufbau erzeugen. Am Beispiel der Desorption des Eisenstearats wurde gezeigt, daß untereinander verbundene plattenförmige Eisen-III-enthaltende Festkörper gebildet werden können, die sich von denen,die durch Thermodesorption von Cadmiumarachidat gebildet werden,unterscheiden.

Der Durchmesser der Cadmiumcluster liegt üblicherweise im Bereich von 0,5 bis 2 $\mu$m, bei einem Abstand von 3 bis 5 $\mu$m (Beispiel 2). Die gebildeten Cluster sind in diesem Fall nicht miteinander verbunden.

Die Verteilung der Mikrostrukturen kann durch Einstellung von Präparationsparametern wie Desorptionskinetik, Keimbildung oder Schichtdicke kontrolliert werden.

Die jeweils anzuwendenden Temperaturen bei der Thermodesorption richten sich nach den verwendeten organischen und anorganischen Komponenten. Die Bindung zwischen Metall und Säurerest darf hierbei nicht zu schwach, aber auch nicht zu stark sein, um bei ausreichend niedrigen Temperaturen die Desorption und somit die Mikrostrukturenausbildung der Metallionen zu gewährleisten. Der Vorteil des erfindungsgemäßen Verfahrens liegt insbesondere in der Anwendung verhältnismäßig milder Temperaturen. Die Mikrostrukturen selbst, die vorwiegend die Metallkomponente, aber kaum Kohlenstoff enthalten, desorbieren erst bei Temperaturen oberhalb 350 °C oder noch höher, abhängig von dem verwendeten Metallion.

Durch Behandlung der so gebildeten Schichten mit heißem Wasserstoff (T = 500 °C) ist es möglich, die Oxidationszustände der Metallionen zu ändern. Anhand des Beispiels von Eisenstearat konnte durch Mößbauer Spektroskopie gezeigt werden, daß nach der Thermodesorption des Stearatrestes zunächst Eisen-III-Ionen vorliegen, die durch die Wasserstoffbehandlung reduziert werden, so daß danach die Eisenatome auch im Oxidationszustand "O" vorliegen. Durch Variation der Anwendungsdauer und Temperatur ist es möglich das Reduktionsverhältnis zu steuern. (Anwendungsbeispiel 3).

Das erfindungsgemäße Verfahren erlaubt es, bei relativ niedrigen Temperaturen anorganische Mikrostrukturen, die einen hohen Ordnungsgrad aufweisen, aufzubauen, welche mit Hilfe der Photolithographie zudem noch lateral strukturiert werden können. Wirtschaftlich interessante Aspekte wären insbesondere im Bereich der Anwendungen in der Optik, der Datenspeicherung, der Katalysatortechnik aber auch der Magnetometrie zu sehen.

**Anwendungsbeispiele**

**Beispiel 1**:

XPS-(X'ray induced Photoelectron Spectroscopy) Messungen an übertragenen LB Filmen vor und nach der Thermodesorption gaben Aufschluß über die Zusammensetzung der chemischen Elemente der Schichten.

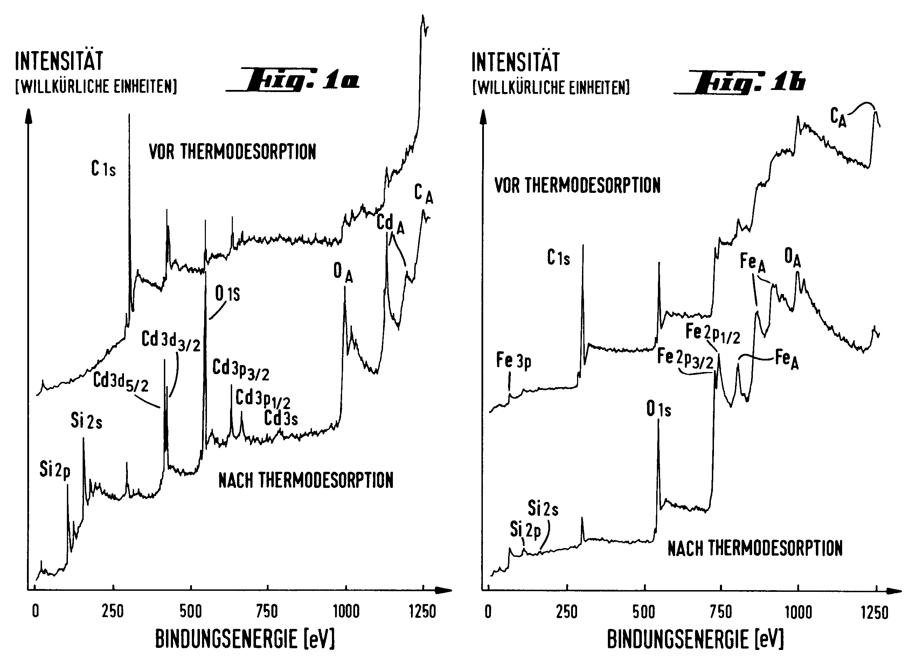

Die Messungen wurden an einer Cadmiumarachidat- (Fig. 1a) und einer Eisen (III) stearat- (Fig. 1b) Multischicht durchgeführt. Die Beschichtung erfolgte nach der klassischen LB-Technik; als Träger wurde hydrophiles Silizium mit einer natürlichen Siliziumoxidschicht von ca. 20-50 Å verwendet.

Der Cadmiumarachidatfilm, bestehend aus 7 Monolagen, wurde nach Spreiten von Arachinsäure auf Milliporewasser mit $10^{-3}$ M $CdCl_2$, bei pH 7 (6 mg $NaHCO_3$/1 Wasser), bei 20 °C und anschließender Kompression bei einem konstanten Druck von 30 mN/m aufgezogen. Die Eisen(III)-stearatmultischicht (17 Monolagen) entstand aus Stearinsäure auf einer Subphase mit $4 \cdot 10^{-5}$ M $FeCl_3$, pH 5,5, 40 °C und bei einem Druck von 30 mN/m. In beiden Fällen betrug die Aufziehgeschwindigkeit 10 mm/min.

Die XPS-Messungen vor der Thermodesorption (Fig 1a, b) zeigten bei beiden Proben, daß die organische Komponente (hohes C-Signal) und das anorganische Metallion (hohe Cadmium-, bzw. Eisenintensität) auf das Substrat übertragen wurden.

Die Messungen nach der Thermodesorption (Fig. 1a, b, die Proben wurden für 30 Minuten auf 250 °C erhitzt) beweisen, daß die organische Komponente fast völlig desorbiert ist (sehr viel geringere C-Intensität), das Metallion allerdings auf dem Träger zurückbleibt (ausgeprägte Cd-, bzw. Fe-Signale). Bei der Probe mit Cadmium ist das Trägersignal (Si) nach der Desorption deutlich zu erkennen (Fig. 1a). Dies ist nur dadurch zu erklären, daß große Teile des Trägers unbedeckt sind und die Cadmiumionen in Form von unzusammenhängenden Clustern auf dem Träger vorliegen. Bei der Eisenprobe ist das Trägersignal kaum zu erkennen, da der Siliziumträger von einer zusammenhängenden Eisenschicht (wahrscheinlich in Form von Eisenoxid) bedeckt ist, so daß keine Elektronen mit der Bindungsenergie des Siliziums detektiert werden können.

**Beispiel 2:**

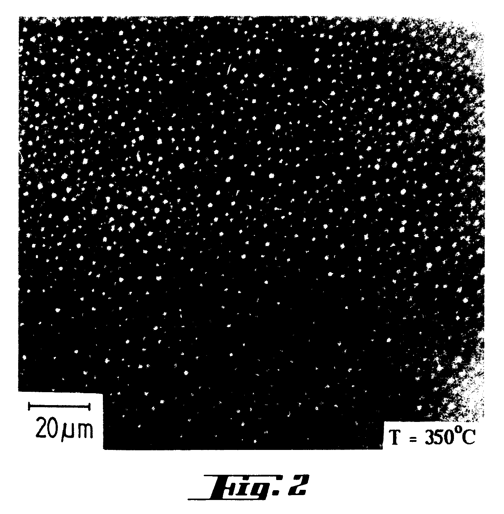

Das Schmelzen einer Cadmiumarachidatschicht (7 Monolagen auf Silizium, Präparationsbedingungen wie im Beispiel 1) wurde unter einem Mikroskop mit Nomarskyeinrichtung verfolgt. Es konnte das Aufbrechen der Schicht und die anschließende Tröpfchenbildung mit Desorption beobachtet werden. Bei einer Heizrate von 0,7 K/s und anschließendem Abkühlen auf Raumtemperatur sind die hellen Cadmiumcluster (Fig. 2) mit einem Durchmesser von 0,5 bis 2 $\mu$m zu sehen.

Bei Eisenstearatproben wurde weder eine Tröpfchen- noch eine Clusterbildung beobachtet.

**Beispiel 3:**

Zur Bestimmung des Oxidationszustandes der

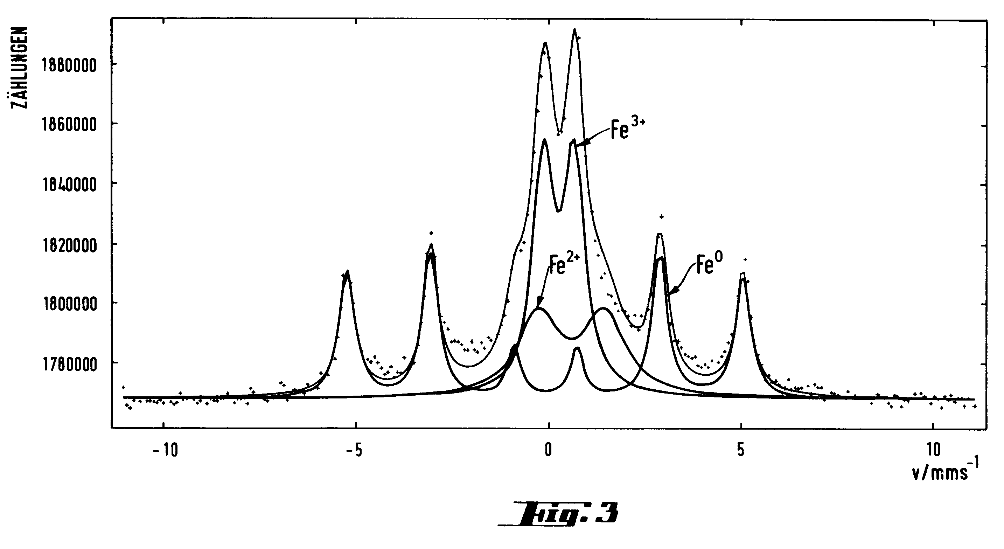

Eisenionen wurde Konversionselektronenmößbau-erspektroskopie an thermodesorbierten Eisenmulti-schichten durchgeführt. Figur 3 zeigt eine solche Messung. Die Probe (15 Monoschichten) wurde wie im Beispiel 1 beschrieben hergestellt, allerdings mit bis zu 95 % angereichertem $Fe^{57}$-(III)-Chlorid. Die Desorption wurde bei 510°C unter einer Wasserstoffatmosphäre (1 Stunde) durchgeführt. Dabei ergab sich ein Anteil von 36 % $Fe^{3+}$-, 24 Q $Fe^{2+}$-Ionen und 40 % $Fe^0$ (metallisches Eisen).

Fig. 1:

XPS-Spektren (Intensität aufgetragen gegen Bindungsenergie) eines Silizium-Trägers, ursprünglich beschichtet mit
a) 7 Monoschichten Cadmiumarachidat,
b) 17 Monolagen Eisen-(III)-stearat
vor (25°C) und nach der Thermodesorption (30 Minuten lang auf 250°C erhitzt und dann auf Raumtemperatur abgekühlt).

Fig. 2:

Nomarskymikroskopische Aufnahme eines Films aus 7 Monolagen Cadmiumarachidat auf Silizium, aufgeheizt mit einer Rate von 0,7 K/s bis 350°C, dann auf Raumtemperatur abgekühlt.

Fig. 3:

Konversionselektronen-Mößbauerspektrum einer Multischicht, ursprünglich bestehend aus 15 Monolagen Eisen-(III)-stearat, und anschließender Thermodesorbtion (1 Stunde) bei 510°C unter einer Wasserstoffatmosphäre.

**Patentansprüche**

1. Verfahren zur Herstellung anorganischer Mikrostrukturen aus Langmuir-Blodgett-Schichten, dadurch gekennzeichnet, daß eine oder mehrere monomolekulare Schichten von Salzen von organischen Säuren unter Erhalt ihrer Ordnung auf einen Träger übertragen werden, wobei die benachbarten Schichten aus gleichen oder verschiedenen Salzen aufgebaut sind, die organische Komponente anschließend durch Erhitzen thermodesorbiert wird und die anorganische Komponente auf dem Träger zurückbleibt.

2. Verfahren nach Anspruch 1, dadurch gekennzeichnet, daß die organische Komponente des Salzes ein Fettsäurerest oder ein Phospholipid-Säurerest ist.

3. Verfahren nach Anspruch 1, dadurch gekennzeichnet, daß die anorganische Komponente des Salzes ein Übergangsmetallion ist, vorzugsweise Eisen, Kobalt, Cadmium, Chrom, Kupfer, Nickel, Mangan, Platin, Silber, Gold oder Rhodium

4. Verfahren nach Anspruch 1, dadurch gekennzeichnet, daß die anorganische Komponente des Salzes ein Alkali- oder Erdalkalimetallion ist.

5. Verfahren nach Anspruch 1, dadurch gekennzeichnet, daß die wässrige Subphase einen pH-Wert höher als 5, insbesondere im Bereich von 5 bis 9 besitzt.

6. Verfahren nach Anspruch 1, dadurch gekennzeichnet, daß die Metallionen Konzentration der Subphase bei zweiwertigen Metallen über $10^{-4}$ M, vorzugsweise über $10^{-3}$ M, und bei einwertigen Metallen über $10^{-4}$ M, vorzugsweise über $10^{-2}$ M beträgt.

7. Verfahren nach Anspruch 1, dadurch gekennzeichnet, daß die organische Komponente bei Temperaturen von 100 bis 350°C desorbiert wird.

8. Verfahren nach Anspruch 1, dadurch gekennzeichnet, daß die anorganische Schicht nach der Thermodesorption der organischen Komponente teilweise oder vollständig reduziert wird.

INTENSITÄT [WILLKÜRLICHE EINHEITEN]

**Fig. 1a**

VOR THERMODESORPTION

C 1s

Cd 3d$_{3/2}$

Cd 3d$_{5/2}$

O 1s

Cd 3p$_{3/2}$

Cd 3p$_{1/2}$

Cd 3s

O$_A$

Cd$_A$

C$_A$

Si 2s

Si 2p

NACH THERMODESORPTION

BINDUNGSENERGIE [eV]

0    250    500    750    1000    1250

INTENSITÄT [WILLKÜRLICHE EINHEITEN]

**Fig. 1b**

C$_A$

VOR THERMODESORPTION

C 1s

Fe$_A$

O$_A$

Fe 2p$_{1/2}$

Fe 3p

Fe 2p$_{3/2}$

Fe$_A$

O 1s

Si 2s

Si 2p

NACH THERMODESORPTION

BINDUNGSENERGIE [eV]

0    250    500    750    1000    1250

EP 0 466 044 A1

20 μm                    T = 350°C

Fig. 2

Fig. 3

| | EINSCHLÄGIGE DOKUMENTE | | KLASSIFIKATION DER ANMELDUNG (Int. Cl.⁵) |
|---|---|---|---|
| Kategorie | Kennzeichnung des Dokuments mit Angabe, soweit erforderlich. der maßgeblichen Teile | Betrifft Anspruch | |
| X | DATABASE WPIL, no. 90-189 605, DERWENT PUBLICATIONS LTD, London, GB<br>   * Zusammenfassung *<br>    & JP-A-02-124 707 (FUJITSU LTD) 01-11-1988<br>-- | 1,2,4 | B 05 D 1/20 |
| X | DATABASE WPIL, no. 90-175 224, DERWENT PUBLICATIONS LTD, London, GB<br>   * Zusammenfassung *<br>    & JP-A-02-115 038 (OKI ELECTRIC IND KK) 27-04-1990<br>-- | 1,2,4 | |
| A | DE - A1 - 3 936 279 (MITSUBISHI DENKI KK)<br>   * Seite 3, Zeilen 46-68; Fig. 6 *<br>-- | 3,7 | |
| A | US - A - 4 317 043 (ROSENBLUTH et al.)<br>   * Gesamt *<br>-- | 1 | RECHERCHIERTE SACHGEBIETE (Int. Cl.⁵) |
| A | EP - A2 - 0 359 101 (HOECHST AKTIENGESELLSCHAFT)<br>   * Seiten 4,5 *<br>---- | | B 05 D<br>C 01 B<br>C 07 C<br>C 07 F<br>C 23 C<br>H 01 L |

Der vorliegende Recherchenbericht wurde für alle Patentansprüche erstellt.

| Recherchenort | Abschlußdatum der Recherche | Prüfer |
|---|---|---|
| WIEN | 23-09-1991 | SCHÜTZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82